Europäisches Patentamt

European Patent Office

Office européen des brevets

(19)

(11) **EP 1 483 633 B1**

(12) **EUROPÄISCHE PATENTSCHRIFT**

(45) Veröffentlichungstag und Bekanntmachung des
Hinweises auf die Patenterteilung:
**26.07.2006 Patentblatt 2006/30**

(21) Anmeldenummer: **03708125.4**

(22) Anmeldetag: **24.02.2003**

(51) Int Cl.:
***G05B 17/02*** (2006.01)

(86) Internationale Anmeldenummer:
**PCT/EP2003/001865**

(87) Internationale Veröffentlichungsnummer:
**WO 2003/077045 (18.09.2003 Gazette 2003/38)**

(54) **VERFAHREN ZUR SIMULATION EINES TECHNISCHEN SYSTEMS UND SIMULATOR**

METHOD FOR SIMULATING A TECHNICAL SYSTEM AND SIMULATOR

PROCEDE DE SIMULATION D'UN SYSTEME TECHNIQUE ET SIMULATEUR ASSOCIE

(84) Benannte Vertragsstaaten:
**AT BE BG CH CY CZ DE DK EE ES FI FR GB GR
HU IE IT LI LU MC NL PT SE SI SK TR**

(30) Priorität: **08.03.2002 EP 02005437**

(43) Veröffentlichungstag der Anmeldung:
**08.12.2004 Patentblatt 2004/50**

(73) Patentinhaber: **SIEMENS
AKTIENGESELLSCHAFT
80333 München (DE)**

(72) Erfinder:
• **BENNOIT, Stefan
55758 Mackenrodt (DE)**
• **HILLERMEIER, Claus
83236 Übersee (DE)**

(56) Entgegenhaltungen:
**US-A- 5 808 915          US-A- 6 154 716**

• **RIZZOLI V ET AL: "HARMONIC-BALANCE
SIMULATION OF STRONGLY NONLINEAR VERY
LARGE-SIZE MICROWAVE CIRCUITS BY
INEXACT NEWTON METHODS" 1996 IEEE MTT-
S INTERNATIONAL MICROWAVE SYMPOSIUM
DIGEST. SAN FRANCISCO, JUNE 17 - 21, 1996,
IEEE MTT-S INTERNATIONAL MICROWAVE
SYMPOSIUM DIGEST, NEW YORK, IEEE, US, Bd.
3, 17. Juni 1996 (1996-06-17), Seiten 1357-1360,
XP000720599 ISBN: 0-7803-3247-4**

## Beschreibung

Die Erfindung betrifft ein Verfahren sowie einen Simulator zur Simulation eines technischen Systems, insbesondere einer Kraftwerksanlage.

In vielen Anwendungsfällen ist es wünschenswert, ein mathematisches Abbild eines technischen Systems zur Verfügung zu haben, um beispielsweise die unter Realbedingungen zu erwartenden Betriebszustände des technischen Systems voraussagen zu können. So ist es z.B. möglich, einen Regler für das technische System zu entwerfen und zu testen, ohne dabei schon während der Entwurfsphase einen Eingriff in ein reales technisches System vornehmen zu müssen, was zu einer Beeinträchtigung und/oder zu einer Gefährdung während des realen Betriebs führen könnte.

Des Weiteren können mittels eines Simulators Betriebszustände des technischen Systems simuliert werden, beispielsweise gefährliche Betriebszustände, welche in dem realen technischen System nur mit hohem Aufwand oder sogar unter Eingehung eines Risikos erzeugbar sind. Besonders vorteilhaft können Simulatoren von technischen Systemen eingesetzt werden, um das für die Bedienung des technischen Systems vorgesehene Betriebspersonal in allen zu erwartenden Betriebsarten vorab zu schulen, so dass das Betriebspersonal das Bedienen des technischen Systems nicht erst während des realen Betriebs erlernen muss.

Zur Realisierung eines Simulators auf einem Rechner ist es notwendig, das technische System mathematisch zu beschreiben.

Die meisten technischen Systeme lassen sich durch eine im Allgemeinen nicht-lineare Differenzialgleichung höherer Ordnung beschreiben.

Um das zeitliche Verhalten des technischen Systems auf einem Rechner simulieren zu können, muss diese Differenzialgleichung höherer Ordnung gelöst werden. Viele bekannte Simulatoren und Simulationsprogramme verwenden zur Lösung dieser höher dimensionalen Differenzialgleichung die dazu äquivalente sogenannte Zustandsraumbeschreibung.

Dabei ist die höher dimensionale Differenzialgleichung beispielsweise n-ten Grades überführt in n Differenzialgleichungen ersten Grades. Die Äquivalenz zwischen der n-dimensionalen Differenzialgleichungen und den n Differenzialgleichungen erster Ordnung ist als Zustandsraumbeschreibung, insbesondere in der regelungstechnischen Literatur, hinreichend bekannt.

Eine derartige Zustandsraumbeschreibung umfasst beispielsweise folgende Zustandsgleichung

$$x` = f(x,t),$$

dabei bezeichnet x den sogenannten Zustandsvektor, t die Zeit und x' die zeitliche Ableitung des Zustandsvektors x. Die Funktion f beschreibt dabei die Systemdynamik und kann im Allgemeinen auch nicht-linear sein. Wenn es sich bei dem technischen System um ein sogenanntes zeitinvariantes System handelt, sich die Systemeigenschaften über die Zeit also nicht verändern, so weisen die das System beschreibenden Differenzialgleichungen konstante Koeffizienten auf.

Falls die Eigenwerte des technischen Systems betragsmäßig sehr weit voneinander entfernt liegen, so spricht man von "steifen" Differenzialgleichungen, welche das System beschreiben. Derartige, betragsmäßig sehr unterschiedliche Eigenwerte des Systems, welche sich beispielsweise um Zehnerpotenzen unterscheiden, beschreiben mathematisch so genannte Eigenschwingungen des Systems, welche untereinander stark unterschiedliche Frequenzen aufweisen. Dies bedeutet, dass in diesem Falle innerhalb des Systems dynamische Vorgänge auf verschiedenen Zeitachsen ablaufen, beispielsweise Vorgänge mit niedriger Eigenfrequenz auf einer Makro-Zeitachse, welchen Vorgänge mit hoher Eigenfrequenz auf einer Mikro-Zeitachse überlagert sind.

Besonders die Lösung derartiger "steifer" Differenzialgleichungssysteme (also Systeme mit Eigenschwingungen stark unterschiedlicher Frequenz) erfordert die Anwendung von besonders stabilen numerischen Lösungsalgorithmen.

Es sind eine Reihe von numerischen Lösungsalgorithmen bekannt, wie z.B. die semi-implizite Euler-Methode oder die Rosenbrock-Methode. Diese genannten Lösungsalgorithmen repräsentieren besonders stabile numerische Integrationsverfahren, insbesondere zur Lösung der genannten "steifen" Differentialgleichungssysteme.

Praktisch alle bekannten numerischen Lösungsalgorithmen berechnen bei der Lösung der Differenzialgleichungen die sogenannte Jacobimatrix der Funktion f, wobei die Jacobimatrix die partiellen Ableitungen jeder Vektorkomponente von f jeweils nach allen Komponenten des Zustandvektors x beinhaltet.

Die Berechnung der Jacobimatrix bei jedem Simulationsschritt führt insbesondere bei hochdimensionalen technischen Systemen zu langen Rechenzeiten, da die partiellen Ableitungen mittels Differenzquotienten in mehreren Schritten approximiert werden müssen.

Das Dokument US 5 808 915 beschreibt ein Verfahren zur Reduzierung des Speicherbedarfs bei der Simulation von Schaltkreisen, bei dem die Berechnung und Speicherung der Werte der Jakobimatrix durch einen iterativ aktualisierten Schätzwert vereinfacht wird.

In dem bekannten Software-Programmpaket Matlab/Simulink werden technische Systeme beispielsweise mittels dynamischer Diagramme modelliert. Derartige Diagramme umfassen Integrierer, Summierer, Multiplizierer und Funktionsblöcke (= Abbildungsvorschriften basierend z.B. auf mathematischen Operationen zur Berechnung von Ausgangssignalen aus an dem Funktionsblock anliegenden Eingangssignalen).

Die numerische Differentiation zur Bestimmung der Jakobimatrix erfordert es, zur Berechnung eines die Differentiation approximierenden Differenzquotienten in einem Simulationsschritt nacheinander jeweils eine Komponente des Zustandsvektors um einen Betrag Δ zu variieren, dabei die jeweils anderen Komponenten des Zustandsvektors festzuhalten und das dynamische Diagramm erneut zu durchlaufen. Dies bedeutet z.B. bei einem System der Ordnung 100, dessen dynamisches Diagramm folglich 100 Integrierer umfasst, dass dieses dynamische Diagramm während eines Simulationsschritts 100mal erneut durchlaufen werden muss, wobei bei jedem erneuten Durchlauf jeweils eine andere Komponente des Zustandsvektors um einen Betrag Δ variiert wird, so dass die zur Lösung des Differentialgleichungssystems benötigte Jakobimatrix mittels der derart ermittelten Differenzquotienten approximiert wird.

Dies erfordert in jedem Simulationsschritt einen gewaltigen Bedarf an Rechenzeit.

Der Erfindung liegt daher die Aufgabe zugrunde, ein Verfahren sowie einen Simulator zur numerischen Simulation eines technischen Systems anzugeben, welche insbesondere hinsichtlich der benötigten Rechenzeit bei der Simulation rationell arbeiten und flexibel einsetzbar sind.

Bezüglich des Verfahrens wird die Aufgabe erfindungsgemäß gelöst durch ein Verfahren zur numerischen Simulation eines technischen Systems in einer Anzahl von Simulationsschritten, wobei das technische System beschrieben ist durch eine Zustandsbeschreibung, welche Zustandsgrößen des technischen Systems umfasst, wobei zur Lösung der Zustandsbeschreibung deren Jacobimatrix verwendet wird und wobei die Zustandsbeschreibung mindestens eine Hilfsfunktion umfasst, welche in jedem Simulationsschritt wiederholt mehrfach ausgewertet wird und wobei jeder Simulationsschritt folgende Simulationsschritte umfasst:

a) Die Hilfsfunktion wird entsprechend eines das technische System repräsentierende dynamischen Diagramms mehrfach ausgewertet und die Werte der jeweiligen Aufrufparameter der Hilfsfunktion und der jeweils zugehörige Hilfsergebniswert jeder Auswertung werden in einem Zwischenspeicher gespeichert,

b) nacheinander wird der aktuelle Wert jeweils einer Zustandsgröße unter Festhalten der Werte der anderen Zustandsgrößen um einen Betragswert variiert und die Hilfsfunktion erneut entsprechend des dynamischen Diagramms mehrfach ausgewertet, wobei jede Auswertung in einer Berechnung des jeweiligen Hilfsergebniswerts besteht, falls die Werte der Aufrufparameter der aktuellen Auswertung nicht mit den im Zwischenspeicher gespeicherten Werten der Aufrufparameter übereinstimmen, und in einem Auslesen des zu den Werten der Aufrufparameter der aktuellen Auswertung gehörigen Hilfsergebniswerts aus dem Zwischenspeicher, falls die Werte der Aufrufparameter der aktuellen Auswertung mit den im Zwischenspeicher gespeicherten Werten der Aufrufparameter übereinstimmen, und

c) die Jakobimatrix wird mittels der in Schritt b) erhaltenen Hilfsergebniswerte ermittelt.

Die Erfindung geht dabei von der Überlegung aus, dass bei sehr vielen technischen Systemen, beispielsweise bei Kraftwerksanlagen, deren Zustandsbeschreibung mindestens eine Hilfsfunktion umfasst, welche zur Auswertung der Zustandsbeschreibung im dynamischen Diagramm mehrfach aufgerufen wird. Diese spezielle Ausgestaltung der Zustandsbeschreibung ist typisch für technische Systeme. Diese Erkenntnis wird beim erfindungsgemäßen Verfahren ausgenutzt, indem bei der Auswertung der Zustandsbeschreibung die mehrfache Auswertung der mindestens einen Hilfefunktion anstelle deren wiederholten Neuberechnung ersetzt wird durch das gezielte Auslesen von bereits berechneten Ergebnissen aus einem Zwischenspeicher. Insbesondere bei der Berechnung der partiellen Ableitungen der Zustandsbeschreibung nach den Zustandsgrößen zur Bestimmung der Jakobimatrix müssen bedingt durch die erforderlichen mehrfachen Durchläufe durch das dynamische Diagramm eine Vielzahl von Auswertungen der Hilfsfunktion stattfinden. Da die Berechnung der partiellen Ableitungen numerisch mittels Differenzenquotienten erfolgt, wird zur Berechnung jedes Elements der Jakobimatrix jeweils der Wert einer Zustandsgröße leicht variiert, die Werte der anderen Zustandsgrößen festgehalten und das dynamische Diagramm erneut durchlaufen, wobei bei jedem Durchlauf die Hilfsfunktion mehrfach ausgewertet wird entsprechend der Häufigkeit ihres Auftretens in der Zustandsbeschreibung des technischen Systems. Es ist leicht erkennbar, dass zur Bestimmung der Jakobimatrix in jedem Simulationsschritt eine i. A. große Anzahl an wiederholten Auswertungen der Hilfsfunktion stattfindet, wobei deren Aufrufparameter sich oftmals nicht ändern, da - wie bereits erwähnt - zur Berechnung der genannten Differenzenquotienten jeweils nur eine Zustandsgröße variiert wird. Beispielsweise ändern sich die Aufrufparameter bei der wiederholten Auswertung der Hilfsfunktion nicht, wenn die Hilfsfunktion nur abhängig ist von einer ersten und einer zweiten Zustandsgröße, in einem aktuellen Berechnungsschritt jedoch lediglich eine dritte Zustandsgröße variiert wird. Wenn nun wie beim erfindungsgemäßen Verfahren vorgesehen - die Aufrufparameter und der zugehörige Hilfsergebniswert der Hilfsfunktion in einen Zwischenspeicher gespeichert werden, so kann das gezielte Auslesen eines bereits zuvor berechneten Hilfsergebniswertes aus dem Zwischenspeicher an die Stelle der Neuberechnung des Hilfsergebniswertes treten, wenn die aktuellen Aufrufparameter der Hilfsfunktion identisch sind mit gespeicherten Aufrufparametern.

Ein Beispiel für eine wiederholt auszuwertende Hilfsfunktion ist eine so genannte Wasser-Dampf-Tafel aus dem Bereich der Kraftwerkstechnik. So können z.B. in der Zustandsbeschreibung einer Kraftwerksanlage 25 oder mehr Auswertungen einer Hilfsfunktion, welche die Temperatur eines Strömungsmediums in Abhängigkeit vom Druck und Enthalpie beschreibt, vorgesehen sein. Diese mehrfache Auswertung ist dann in jedem Simulationsschritt wiederholt vorzunehmen, da bei der Berechnung der Jakobimatrix durch die bereits genannte sequentielle Variation nur einer Zustandsgröße eine Reihe von Durchläufen des dynamischen Diagramms nötig ist; die Anzahl der benötigten Durchläufe entspricht dabei mindestens der Anzahl an Komponenten des Zustandsvektors. In Versuchen hat sich gezeigt, dass durch das erfindungsgemäße Verfahren bei der Simulation geläufiger technischer Systeme teilweise mehr als 90 % der Neuberechnungen der Hilfsfunktion ersetzt werden können durch das gezielte Auslesen eines zuvor bereits berechneten Ergebnisses aus dem Zwischenspeicher.

Vorteilhaft sind im Zwischenspeicher eine Anzahl von Werten von Aufrufparametern und jeweils zugehörigem Hilfsergebniswert gespeichert, wobei diese Anzahl der Anzahl der Auswertungen der Hilfsfunktion entspricht, die entsprechend dem dynamischen Diagramm in Schritt a) vorgenommen werden.

Oftmals fällt bei der Auflistung der im Verlauf einer numerischen Simulation anfallenden Aufrufargumente der Hilfsfunktion auf, dass eine Periodizität vorliegt, sich die Werte der Aufrufargumente der Hilfsfunktion also bei erneuten Auswertungen größtenteils wiederholen, da die sequentielle Variation nur einer Zustandsgröße während eines Simulationsschritts die Aufrufparameter der Hilfsfunktion unverändert lässt, wenn die Hilfsfunktion nicht von der aktuell variierten Zustandsgröße abhängt. Dies bedeutet nichts anderes, als dass die Kenntnis der Aufrufargumente der Hilfsfunktion einer Periode ausreichend ist, um einen aktuellen Funktionswert für die Hilfsfunktion für einen aktuellen Zeitpunkt angeben zu können, ohne die Hilfsfunktion berechnen zu müssen. Es genügt stattdessen das gezielte Auslesen des gewünschten Hilfsergebniswerts aus dem Zwischen-Speicher. Wenn nun das dynamische Diagramm die Hilfsfunktion beispielsweise n-fach umfasst, so werden die entsprechenden n Sätze von Aufrufparametern und der jeweils zugehörige Hilfsergebniswert im Zwischenspeicher abgelegt. Bei einer Variation einer Zustandsgröße zur Berechnung eines Elements der Jakobimatrix wird nun das dynamische Diagramm wiederholt durchlaufen und die Hilfsfunktion dabei jeweils n-fach ausgewertet. Dabei ändern sich oftmals - wie bereits erwähnt - nicht die Werte der Aufrufparameter, da die Hilfsfunktion meist nur von einem Teil der Zustandsgrößen abhängt. Die Berechnung der Hilfsfunktion kann in diesem Fall durch gezieltes Auslesen eines bereits berechneten, zu einem der n gespeicherten Aufrufparameter gehörigen, Hilfsergebniswertes ersetzt werden.

Die genannte Periodizität wird bei der Erfindung ausgenutzt, um zeitaufwendige Auswertungen der Hilfsfunktion großteils überflüssig zu machen und durch ein gezieltes Auslesen aus dem speziell konstruierten Zwischen-Speicher zu ersetzen.

Weiterhin ist es vorteilhaft, wenn die Anzahl an Werten der Aufrufparameter und der jeweils zugehörige Hilfsergebniswert im Zwischenspeicher in einer Reihenfolge gespeichert sind, welche der festgelegten Auswertungsreihenfolge entspricht. Unter Anzahl an Werten der Aufrufparameter wird dabei die Anzahl an Sätzen von Aufrufparametern verstanden, wenn die Hilfsfunktion mehrere - also einen Satz von - Aufrufparametern umfasst.

Wie oben erwähnt werden zur Bestimmung der Elemente der Jakobimatrix nacheinander die Zustandsgrößen variiert und das dynamische Diagramm nach jeder dieser Variationen komplett durchlaufen, so dass bei jedem dieser Durchläufe die mindestens eine Hilfsfunktion mehrfach in der festgelegten Auswertungsreihenfolge berechnet wird. Diese festgelegte Auswertungsreihenfolge bleibt selbstverständlich bei jedem Durchlauf des dynamischen Diagramms erhalten.

In dieser Ausgestaltung der Erfindung werden nun die Aufrufparameter und der jeweils zugehörige Hilfsergebniswert der mindestens einen Hilfsfunktion im Zwischenspeicher in der Reihenfolge abgelegt, welche der festgelegten Auswertungsreihenfolge der Hilfsfunktion entspricht. Da sich die Auswertungsreihenfolge bei wiederholten Durchläufen durch das dynamische Diagramm nicht ändert, ist bei der Berechnung der Hilfsfunktion entsprechend der Auswertungsreichenfolge sofort klar, mit welchem Speichereintrag des Zwischenspeichers die aktuellen Aufrufparameter der Hilfsfunktion verglichen werden müssen, um ggf. einen bereits zuvor berechneten Hilfsergebniswert aus dem Zwischenspeicher auslesen zu können, anstelle diesen berechnen zu müssen (wenn die aktuellen Aufrufparameter den gespeicherten Aufrufparametern des entsprechenden Zwischenspeichereintrags entsprechen).

Sind beispielsweise im dynamischen Diagramm drei Funktionsblöcke für die Hilfsfunktion vorgesehen, die Hilfsfunktion ist also bei einem Durchlauf des dynamischen Diagramms dreimal auszuwerten, so werden diese Funktionsblöcke beispielsweise entsprechend einer grafischen Darstellung des dynamischen Diagramms nacheinander bearbeitet und die entsprechenden Aufrufparameter und der jeweilige Hilfsergebniswert der Hilfsfunktion ist in eben dieser Auswertungsreihenfolge im Zwischenspeicher abgelegt.

Bei einem erneuten Durchlauf durch das dynamische Diagramm bei der Variation einer Zustandsgröße werden die die Hilfsfunktion repräsentierenden Funktionsblöcke in der selben festgelegten Auswertungsreihenfolge bearbeitet, so dass bei einem Vergleich der aktuellen Aufrufparameter eines die Hilfsfunktion repräsentierenden Funktionsblocks sofort mit dem entsprechenden Eintrag im Zwischenspeicher verglichen werden kann, ohne den Zwischenspeicher durchsuchen zu müssen.

Softwaretechnisch kann die genannte Vergleichsstrategie beispielsweise dadurch realisiert werden, dass der Zwischenspeicher mit einem so genannten Zeiger versehen wird, der zu Beginn des Durchlaufs durch das dynamische Diagramm zunächst auf einen ersten Speichereintrag des Zwischenspeichers zeigt (welcher selbstverständlich bei einem Neustart des Verfahrens leer sein kann) und dann bei der Bearbeitung eines nächsten die Hilfsfunktion repräsentierenden Funktionsblocks auf einen nächsten Speichereintrag des Zwischenspeichers gesetzt wird. Bei einer aktuellen Auswertung eines die Hilfsfunktion repräsentierenden Funktionsblocks können nun die aktuellen Aufrufparameter gezielt mit denjenigen Aufrufparametern verglichen werden, welche durch die aktuelle Position des Zeigers markiert sind. Stimmen die aktuellen Aufrufparameter und die durch den Zeiger markierten gespeicherten Aufrufparameter überein, so muss der aktuelle Hilfsergebniswert nicht berechnet werden, sondern es genügt ein Auslesen des vom markierten Speichereintrag des Zwischenspeichers umfassten Hilfsergebniswerts.

Nach einem kompletten Durchlauf durch das dynamische Diagramm wird der Zeiger dann wieder an die erste Speicherposition des Zwischenspeichers gesetzt und es kann ein erneuter Durchlauf durch das dynamische Diagramm stattfinden. Softwaretechnisch wird der Zeiger also mit einem zyklischen Verhalten ausgestattet, so dass er bei einem Durchlauf durch das dynamische Diagramm entsprechend der mehrfachen Auswertung der Hilfsfunktion von einem Speichereintrag des Zwischenspeichers zum jeweils nächsten Speichereintrag wandert bis der letzte Speichereintrag erreicht ist. Bei einem erneuten Durchlauf durch das dynamische Diagramm wird der Zeiger dann wieder auf den ersten Speichereintrag zurückgesetzt.

Bei jeder mehrfachen Auswertung der Hilfsfunktion in Schritt b) des erfindungsgemäßen Verfahrens werden vorteilhaft die aktuellen Werte der Aufrufparameter mit den entsprechenden im Zwischenspeicher gespeicherten Werten der Aufrufparameter verglichen.

Dieser Vergleich ist sehr effizient möglich, da die Einträge im Zwischenspeicher in der festgelegten Auswertungsreihenfolge vorliegen und daher z.B. mittels des vorher genannten Software-Zeigers ein gezielter Zugriff auf einen Speichereintrag des Zwischenspeichers möglich ist, ohne den Zwischenspeicher durchsuchen zu müssen.

Die Erfindung führt weiterhin zu einem Simulator zur Simulation eines technischen Systems in einer Anzahl von Simulationsschritten, wobei das technische System beschrieben ist durch eine Zustandsbeschreibung, welche Zustandsgrößen des technischen Systems umfasst, wobei zur Lösung der Zustandsbeschreibung deren Jakobimatrix verwendet wird und wobei die Zustandsbeschreibung mindestens eine Hilfsfunktion umfasst, welche in jedem Simulationsschritt wiederholt mehrfach ausgewertet wird; ein erfindungsgemäßer Simulator umfasst weiterhin einen Zwischenspeicher, in welchem Werte von Aufrufparametern und der jeweils zugehörige Hilfsergebniswert der Hilfsfunktion in einer festgelegten Auswertungsreihenfolge in jeweils einem Teilbereich des Zwischenspeichers gespeichert sind, wobei bei jeder Wiederholung der mehrfachen Auswertung mittels eines gezielten Lesezugriffs auf einen Teilbereich des Zwischenspeichers der in diesem Teilbereich gespeicherte Hilfsergebniswert ausgelesen ist, falls die aktuellen Werte der Aufrufparameter mit den gespeicherten Werten der Aufrufparameter übereinstimmen.

Der gezielte Lesezugriff kann beispielsweise mittels des bereits im Zusammenhang mit dem erfindungsgemäßen Verfahren genannten softwaretechnischen Zeigers realisiert werden.

Im Folgenden werden zwei Ausführungsbeispiele der Erfindung näher dargestellt. Es zeigen:

FIG 1 ein erfindungsgemäßes Verfahren und
FIG 2 einen erfindungsgemäßen Simulator.

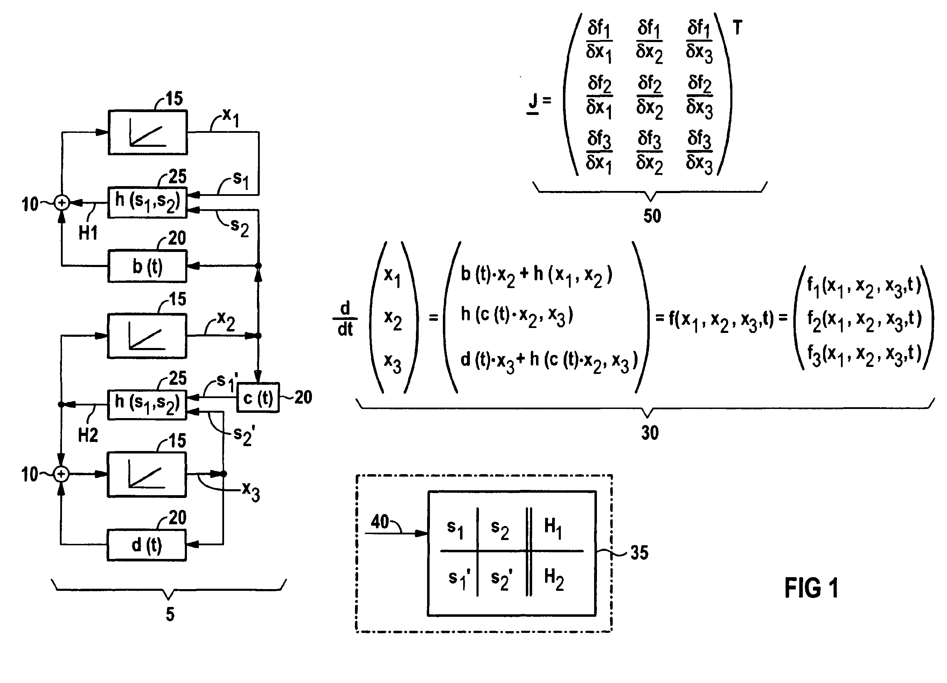

FIG 1 illustriert ein erfindungsgemäßes Verfahren zur Simulation eines technischen Systems.

Das technische System ist mathematisch durch die Zustandsbeschreibung 30 beschrieben. Aus dieser Zustandsbeschreibung 30 ist ersichtlich, dass das technische System in diesem Beispiel ein System dritter Ordnung ist und infolge dessen drei Zustandsgrößen $x_1$, $x_2$ und $x_3$ umfasst.

Bei technischen Systemen kommt es sehr häufig vor, dass dessen mathematische Zustandsbeschreibung 30 eine Hilfsfunktion 25 umfasst, welche in der Zustandsbeschreibung 30 mehrfach vorkommt und daher bei der Simulation des technischen Systems mehrfach ausgewertet wird.

Im vorliegenden Beispiel kommt die Hilfsfunktion 25 in der Zustandsbeschreibung 30 in zwei Ausprägungen vor, einmal mit den Zustandsgrößen $x_1$ und $x_2$ als deren Aufrufparameter $s_1$ und $s_2$ und zum anderen mit den Zustandsgrößen $x_2$ und $x_3$ als deren Aufrufparameter $s'_1$ und $s'_2$. Die Zustandsgröße $x_2$ ist dabei noch zusätzlich mit einem zeitabhängigen Faktor c (t) multipliziert.

Die Hilfsfunktion 25 kann beispielsweise eine Wasser-Dampf-Tafel sein, welche während der Simulation in jedem Simulationsschritt wiederholt mehrfach auszuwerten ist.

Viele numerische Lösungsalgorithmen, welche insbesondere auf Rechnern ausgeführt werden, verwenden zur Lösung der Zustandsbeschreibung 30 die Jakobimatrix J, deren mathematische Darstellung 50 ebenfalls in der FIG 1 beispielhaft gezeigt ist. Die Elemente der Jakobimatrix J sind die partiellen Ableitungen der die Zustandsbeschreibung 30 bildenden Zustandsgleichungen nach den Zustandsgrößen $x_1$, $x_2$ und $x_3$. Numerisch werden Ableitungen mittels so genannter Differenzenquotienten approximiert, indem der Funktionswert zu einem aktuellen Wert einer Zustandsgröße berechnet wird, der Wert der Zustandsgröße anschließend leicht variiert wird und der Funktionswert erneut berechnet wird, welcher sich aufgrund der Variation der Zustandsgröße ergibt. Der Wert der zu bestimmenden partiellen Ableitung wird dann approximiert durch die Differenz der vorher genannten Funktionswerte geteilt durch die Differenz aus Zustandsgröße und variierter Zustandsgröße.

In einem dynamischen Diagramm 5, welches einer Visualisierung der Zustandsbeschreibung 30 eines technischen Systems entspricht, sind insbesondere die Signalflüsse, die während einer Simulation des technischen Systems auftreten, ersichtlich.

Da es sich im Beispiel der FIG 1 um ein technisches System dritter Ordnung handelt, umfasst das dynamische Diagramm 5 folglich drei Integratoren 15, an deren Ausgängen die Zustandsgrößen $x_1$, $x_2$ und $x_3$ anliegen. Entsprechend der mathematischen Darstellung der Zustandsbeschreibung 30 sind im dynamischen Diagramm 5 weiterhin Summierer 10, Multiplizierer 20 und zwei Funktionsblöcke für die Hilfsfunktion 25 vorgesehen.

Im vorliegenden Beispiel wird also bei einem Durchlauf durch das dynamische Diagramm die Hilfsfunktion 25 zweimal ausgewertet; zum einen mit den Aufrufparametern $S_1$ und $S_2$ und zum anderen mit den Aufrufparametern $s'_1$ und $s'_2$. Den Aufrufparametern $s_1$ und $s_2$ entsprechen in diesem Beispiel die Zustandsgrößen $x_1$ bzw. $x_2$ und den Aufrufparametern $s'_1$ und $s'_2$ entsprechen die Zustandsgrößen $x_2$ bzw. $x_3$, wobei die Zustandsgröße $x_2$ mit dem zeitabhängigen Faktor $c(t)$ multipliziert ist.

Das dynamische Diagramm 5 wird in jedem Simulationsschritt wiederholt durchlaufen und bei jeder Wiederholung wird die Hilfsfunktion 25 zweimal ausgewertet.

Die wiederholten Durchläufe durch das dynamische Diagramm 5 sind dadurch bedingt, dass zur Bestimmung der Elemente der Jakobimatrix J eines Simulatorschritts mittels eines numerischen Algorithmus nacheinander die Werte der Zustandsgrößen $x_1$, $x_2$ und $x_3$ um einen, insbesondere kleinen, Betragswert variiert werden und das dynamische Diagramm 5 anschließend erneut durchlaufen wird. Dies ist zur Bestimmung der bereits vorher genannten Differenzenquotienten notwendig.

Im Beispiel der FIG 1 wird folglich das dynamische Diagramm 5 während eines Simulationsschritts viermal durchlaufen; während des ersten Durchlaufs wird die Zustandsbeschreibung 30 mit den aktuellen Werten für die Zustandsgrößen $x_1$, $x_2$ und $x_3$ sowie der anderen Parameter ausgewertet und in den drei folgenden Durchläufen wird jeweils eine Zustandsgröße leicht variiert, wobei die Werte der jeweils anderen Zustandsgrößen festgehalten werden.

So ist leicht zu erkennen, dass die Hilfsfunktion 25 bei jedem Durchlauf durch das dynamische Diagramm 5 zweimal ausgewertet wird, also insgesamt acht Auswertungen der Hilfsfunktion 25 während eines Simulationsschritts stattfinden.

Beim erfindungsgemäßen Verfahren wird eine Verbesserung der Simulation im Vergleich zu bekannten Verfahren, insbesondere hinsichtlich der benötigten Rechenzeit dadurch erreicht, dass bei den Durchläufen durch das dynamische Diagramm 5, bei welchen jeweils eine der Zustandsgrößen $x_1$, $x_2$ und $x_3$ variiert wird, nicht immer wieder neu eine Berechnung des Hilfsergebniswerts $H_1$ und $H_2$ stattfindet, sondern dass die genannten Hilfsergebniswerte aus einem Zwischenspeicher 35 ausgelesen werden, wenn die aktuellen Werte der Aufrufparameter $s_1$ und $s_2$ bzw. $s'_1$ und $s'_2$ mit im Zwischenspeicher 35 gespeicherten Aufrufparametern übereinstimmen.

Bei der Simulation von technischen Systemen kann ein derartiges Auslesen aus dem Zwischenspeicher 35 anstelle einer Berechnung des jeweiligen Hilfsergebniswerts $H_1$ und $H_2$ im Allgemeinen sehr oft stattfinden, da technische Systeme oftmals mittels einer Zustandsbeschreibung 30 beschreibbar sind, welche eine Hilfsfunktion 25 mehrfach umfasst und wobei insbesondere diese Hilfsfunktion nur von einem Teil der Zustandsgrößen $x_1$, $x_2$ und $x_3$ abhängt. Bei einer Variation einer Zustandsgröße zur Bestimmung eines Elements der Jakobimatrix J verändern sich nun nur diejenigen Hilfsergebniswerte $H_1$ und $H_2$, deren zugehörige Aufrufparameter $s_1$ und $s_2$ bzw. $s'_1$ und $s'_2$ die variierte Zustandsgröße umfassen; wird beispielsweise die Zustandsgröße $x_1$ variiert und das dynamische Diagramm 5 anschließend durchlaufen, so ändert sich bei diesem Durchlauf nur der Hilfsergebniswert $H_1$ und nicht der Hilfsergebniswert $H_2$, da sich nur die Aufrufparameter $s_1$ und $s_2$, nicht jedoch die Aufrufparameter $s'_1$ und $s'_2$ infolge der Variation von $x_1$ verändert haben. Der Hilfsergebniswert $H_2$ wurde also bereits im vorangegangenen Durchlauf durch das dynamische Diagramm 5 berechnet und kann aus dem Zwischenspeicher 35 ausgelesen werden, da nach der Variation der Zustandsgröße $x_1$ die aktuellen Werte der Aufrufparameter $s'_1$ und $s'_2$ identisch sind mit den gespeicherten Werten der Aufrufparameter $s'_1$ und $s'_2$. Bei der Neuberechnung des Hilfsergebniswerts $H_1$ können die entsprechenden Aufrufparameter sowie der (neue) Hilfsergebniswert $H_1$ im Zwischenspeicher 35 abgelegt werden, wobei der vor der Neuberechnung zu $H_1$ korrespondierende (alte) Hilfsergebniswert $H_1$ sowie dessen (alte) Aufrufparameter überschrieben werden können durch die neuen Werte.

Um ein gezieltes Auslesen aus dem Zwischenspeicher 35 zu ermöglichen, kann beispielsweise ein Zeiger 40 verwendet werden, welcher auf denjenigen Speichereintrag des Zwischenspeichers 35 zeigt, der zur aktuellen Auswertung der Hilfsfunktion 25 korrespondiert.

Vorteilhaft findet die mehrfache Auswertung der Hilfsfunktion 25 während eines Durchlaufs durch das dynamische Diagramm 5 in einer festgelegten Auswertungsreihenfolge statt, so dass die Speichereinträge im Zwischenspeicher 35 in eben dieser Reihenfolge abgelegt werden und der Zeiger 40 entsprechend der Auswertungsreihenfolge auf den zur aktuellen Auswertung korrespondierenden Speichereintrag des Zwischenspeichers 35 zeigt.

Im vorliegenden Beispiel umfasst der Zwischenspeicher 35 zwei Speichereinträge, jeweils bestehend aus den Werten für die Aufrufparameter $s_1$, $s_2$ bzw. $s'_1$, $s'_2$ und dem jeweiligen Hilfsergebniswert $H_1$ bzw. $H_2$. Es sind also vorteilhaft genau so viele Speichereinträge im Zwischenspeicher 35 vorhanden, wie die Hilfsfunktion 25 während eines Durchlaufs durch das dynamische Diagramm 5 ausgewertet wird. Durch Setzen des Zeigers 40 auf denjenigen Speichereintrag, welcher der aktuellen Auswertung der Hilfsfunktion 25 entspricht, kann gezielt auf einen Speichereintrag im Zwischenspeicher 35 zugegriffen werden, ohne dass der Zwischenspeicher 35 beim Vergleichen der aktuellen Werte mit den gespeicherten Werten der Aufrufparameter durchsucht werden muss.

Beim erfindungsgemäßen Verfahren gemäß der FIG 1 wird also die Hilfsfunktion entsprechend eines das technische System repräsentierende dynamischen Diagramms 5 mehrfach ausgewertet und die Werte der jeweiligen Aufrufparameter $s_1$, $s_2$, $s'_1$, $s'_2$ der Hilfsfunktion 25 und der jeweils zugehörige Hilfsergebniswert $H_1$, $H_2$ jeder Auswertung werden in einem Zwischenspeicher 35 gespeichert. Nacheinander wird der aktuelle Wert jeweils einer Zustandsgröße $x_1$, $x_2$, $x_3$ unter Festhalten der Werte der anderen Zustandsgrößen um einen insbesondere kleinen Betragswert variiert und die Hilfsfunktion 25 erneut entsprechend des dynamischen Diagramms 5 mehrfach ausgewertet, wobei jede Auswertung in einer Berechnung des jeweiligen Hilfsergebniswerts $H_1$, $H_2$ besteht, falls die Werte der Aufrufparameter $s_1$, $s_2$, $s'_1$, $s'_2$ der aktuellen Auswertung nicht mit den im Zwischenspeicher 35 gespeicherten Werten der Aufrufparameter $s_1$, $s_2$, $s'_1$, $s'_2$ übereinstimmen, und in einem Auslesen des zu den Werten der Aufrufparameter der aktuellen Auswertung gehörigen Hilfsergebniswerts $H_1$, $H_2$ aus dem Zwischenspeicher 35, falls die Werte der Aufrufparameter der aktuellen Auswertung mit dem im Zwischenspeicher 35 gespeicherten Werten der Aufrufparameter übereinstimmen. Die Jakobimatrix J wird mittels der berechneten und/oder aus dem Zwischenspeicher 35 ausgelesenen Hilfsergebniswerte $H_1$, $H_2$ ermittelt.

Die Angabe eines erfindungsgemäßen Verfahrens setzt die Erkenntnis voraus, dass ein technisches System oftmals durch eine Zustandsbeschreibung 30 beschreibbar ist, welche eine Hilfsfunktion mehrfach umfasst. Weiterhin ist beim erfindungsgemäßen Verfahren die Erkenntnis wichtig, dass bei technischen Systemen die von der Zustandsbeschreibung 30 mehrfach umfasste Hilfsfunktion 25 meistens nur von einem Teil der Zustandsgrößen $x_1$, $x_2$ und $x_3$ abhängt, so dass sich bei der Ermittlung der Differenzenquotienten zur Bestimmung der Elemente der Jakobimatrix J mittels sukzessiver Variation der Zustandsgrößen $x_1$, $x_2$ und $x_3$ oftmals zumindest einige Hilfsergebniswerte der Hilfsfunktion 25 bei der mehrfachen Auswertung während eines Durchlaufs durch das dynamische Diagramm 5 nicht verändern, wenn die zur aktuellen Auswertung der Hilfsfunktion 25 gehörigen Aufrufparameter von der Variation einer Zustandsgröße nicht betroffen sind.

Die vorgenannten Erkenntnisse hinsichtlich der genannten typischen Eigenschaften technischer Systeme sind im Stand der Technik weder offenbart noch nahe gelegt.

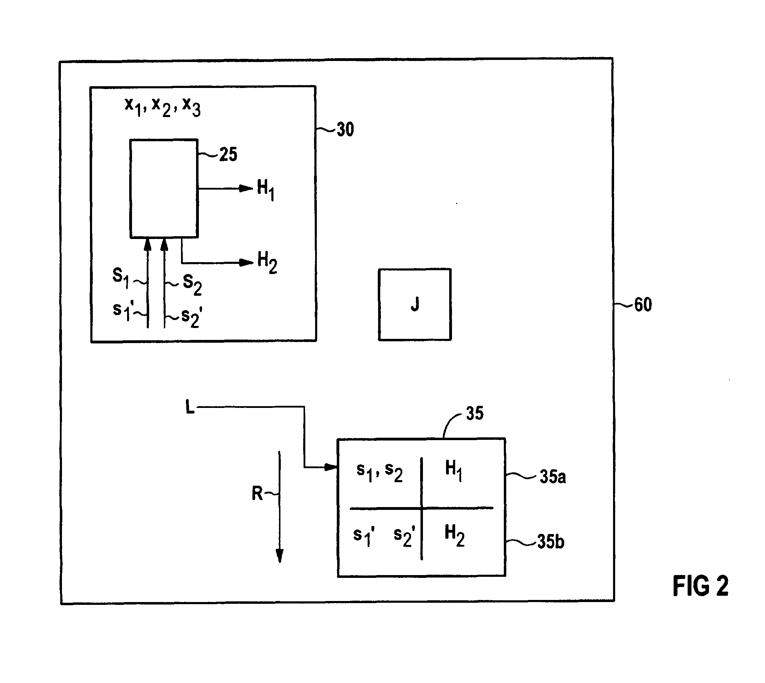

FIG 2 zeigt einen erfindungsgemäßen Simulator 60 zur Simulation eines technischen Systems in einer Anzahl von Simulationsschritten.

Das technische System ist Beschrieben durch eine Zustandsbeschreibung 30, welche Zustandsgrößen $x_1$, $x_2$ und $x_3$ des technischen Systems umfasst und wobei zur Lösung der Zustandsbeschreibung deren Jakobimatrix J verwendet wird und wobei die Zustandsbeschreibung 30 mindestens eine Hilfsfunktion 25 umfasst, welche in jedem Simulationsschritt wiederholt mehrfach ausgewertet wird. Der erfindungsgemäße Simulator 60 umfasst einen Zwischenspeicher 35, in welchem Werte von Aufrufparametern $s_1$, $s_2$, $s'_1$, $s'_2$ und der jeweils zugehörige Hilfsergebniswert $H_1$, $H_2$ der Hilfsfunktion 25 in einer festgelegten Auswertungsreihenfolge R in jeweils einem Teilbereich 35a, 35b des Zwischenspeichers gespeichert sind, wobei bei jeder Wiederholung der mehrfachen Auswertung mittels eines gezielten Lesezugriffs L auf einen der Teilbereiche 35a, 35b des Zwischenspeichers 35 der in diesem Teilbereich gespeicherte Hilfsergebniswert $H_1$, $H_2$ ausgelesen ist, falls die aktuellen Werte der Aufrufparameter $s_1$, $s_2$ bzw. $s'_1$, $s'_2$ mit den gespeicherten Werten der Aufrufparameter $s_1$, $s_2$ bzw. $s'_1$, $s'_2$ übereinstimmen.

Die im Zusammenhang mit dem erfindungsgemäßen Verfahren gemachten Erläuterungen sind in analoger Weise auf den erfindungsgemäßen Simulator 60 anwendbar und werden daher hier nicht wiederholt.

## Patentansprüche

1. Verfahren zur Simulation eines technischen Systems in einer Anzahl von Simulationsschritten, wobei das technische System beschrieben ist durch eine Zustandsbeschreibung (30), welche Zustandsgrößen ($x_1$, $x_2$, $x_3$) des technischen Systems umfasst, wobei zur Lösung der Zustandsbeschreibung (30) deren Jakobimatrix (J) verwendet wird und wobei die Zustandsbeschreibung (30) mindestens eine Hilfsfunktion (25) umfasst, welche in jedem Simulationsschritt wiederholt mehrfach ausgewertet wird, **dadurch gekennzeichnet, dass** jeder Simulationsschritt folgende Simulationsunterschritte umfasst:

   a) Die Hilfsfunktion (25) wird entsprechend eines das technische System repräsentierende dynamischen Diagramms (5) mehrfach ausgewertet und die Werte der jeweiligen Aufrufparameter ($s_1$, $s_2$, $s'_1$, $s'_2$) der Hilfsfunktion (25) und der jeweils zugehörige Hilfsergebniswert ($H_1$, $H_2$) jeder Auswertung werden in einem Zwischenspeicher (35) gespeichert,

   b) nacheinander wird der aktuelle Wert jeweils

einer Zustandsgröße ($x_1$, $x_2$, $x_3$) unter Festhalten der Werte der anderen Zustandsgrößen um einen Betragswert variiert und die Hilfsfunktion (25) erneut entsprechend des dynamischen Diagramms (5) mehrfach ausgewertet, wobei jede Auswertung in einer Berechnung des jeweiligen Hilfsergebniswerts ($H_1$, $H_2$) besteht, falls die Werte der Aufrufparameter der aktuellen Auswertung nicht mit den im Zwischenspeicher gespeicherten Werten der Aufrufparameter ($s_1$, $s_2$, $s'_1$, $s'_2$) übereinstimmen, und in einem Auslesen des zu den Werten der Aufrufparameter ($s_1$, $s_2$, $s'_1$, $s'_2$) der aktuellen Auswertung gehörigen Hilfsergebniswerts ($H_1$, $H_2$) aus dem Zwischenspeicher (35), falls die Werte der Aufrufparameter ($s_1$, $s_2$, $s'_1$, $s'_2$) der aktuellen Auswertung mit den im Zwischenspeicher (35) gespeicherten Werten der Aufrufparameter ($s_1$, $s_2$, $s'_1$, $s'_2$) übereinstimmen, und

c) die Jakobimatrix (J) wird mittels der in Schritt b) erhaltenen Hilfsergebniswerte ($H_1$, $H_2$) ermittelt.

2. Verfahren nach Anspruch 1,
**dadurch gekennzeichnet, dass**
im Zwischenspeicher (35) eine Anzahl von Werten von Aufrufparametern ($s_1$, $s_2$, $s'_1$, $s'_2$) und jeweils zugehörigem Hilfsergebniswert ($H_1$, $H_2$) gespeichert sind, wobei diese Anzahl der Anzahl an Auswertungen der Hilfsfunktion (25) entspricht, die entsprechend dem dynamischen Diagramm in Schritt a) vorgenommen werden.

3. Verfahren nach Anspruch 2,
**dadurch gekennzeichnet, dass** die mehrfache Auswertung der Hilfsfunktion (25) in einer festgelegten Auswertungsreihenfolge erfolgt.

4. Verfahren nach Anspruch 3,
**dadurch gekennzeichnet, dass**
die Anzahl an Werten der Aufrufparameter ($s_1$, $s_2$, $s'_1$, $s'_2$) und der zugehörige Hilfsergebniswert ($H_1$, $H_2$) im Zwischenspeicher in einer Reihenfolge gespeichert sind, welche der festgelegten Auswertungsreihenfolge entspricht.

5. Verfahren nach Anspruch 4,
**dadurch gekennzeichnet, dass**
bei jeder mehrfachen Auswertung der Hilfsfunktion (25) in Schritt b) die aktuellen Werte der Aufrufparameter ($s_1$, $s_2$, $s'_1$, $s'_2$) mit den entsprechenden im Zwischenspeicher (35) gespeicherten Werten der Aufrufparameter ($s_1$, $s_2$, $s'_1$, $s'_2$) verglichen werden.

6. Simulator (60) zur Simulation eines technischen Systems in einer Anzahl von Simulationsschritten, wobei das technische System beschrieben ist durch eine Zustandsbeschreibung (30), welche Zustandsgrößen ($x_1$, $x_2$, $x_3$) des technischen Systems umfasst, wobei zur Lösung der Zustandsbeschreibung (30) deren Jakobimatrix (J) verwendet wird und wobei die Zustandsbeschreibung (30) mindestens eine Hilfsfunktion (25) umfasst, welche in jedem Simulationsschritt wiederholt mehrfach ausgewertet wird,
**gekennzeichnet durch**
einen Zwischenspeicher (35), in welchem Werte von Aufrufparametern und der jeweils zugehörige Hilfsergebniswert ($H_1$, $H_2$) der Hilfsfunktion (25) in einer festgelegten Auswertungsreihenfolge (R) in jeweils einem Teilbereich (35a, 35b) des Zwischenspeichers (35) gespeichert sind, wobei bei jeder Wiederholung der mehrfachen Auswertung mittels eines gezielten Lesezugriffs auf einen Teilbereich des Zwischenspeichers der in diesem Teilbereich gespeicherte Hilfsergebniswert ($H_1$, $H_2$) ausgelesen ist, falls die aktuellen Werte der Aufrufparameter ($s_1$, $s_2$, $s'_1$, $s'_2$) mit den gespeicherten Werten der Aufrufparameter ($s_1$, $s_2$, $s'_1$, $s'_2$) übereinstimmen.

**Claims**

1. Method for simulation of a technical system in a number of simulation steps, with the technical system being described by a state description (30) which comprises state variables ($x_1$, $x_2$, $x_3$) for the technical system, with its Jacobi matrix (J) being used to solve the state description (30), and with the state description (30) having at least one auxiliary function (25) which is evaluated a number of times repeatedly in each simulation step,
**characterized in that**
each simulation step comprises the following simulation step elements:

a) the auxiliary function (25) is evaluated two or more times corresponding to a dynamic diagram (5) which represents the technical system, and the values of the respective calling parameters ($s_1$, $s_2$, $s'_1$, $s'_2$) of the auxiliary function (25) and the respectively associated auxiliary result value ($H_1$, $H_2$) for each evaluation are stored in a buffer store (35),
b) the current value of each state variable ($x_1$, $x_2$, $x_3$) is varied successively by a magnitude value while keeping the values of the other state variables constant, and the auxiliary function (25) is evaluated two or more times once again on the basis of the dynamic diagram (5), with each evaluation comprising a calculation of the respective auxiliary result value ($H_1$, $H_2$) if the values of the calling parameters of the current evaluation do not match the values of the calling parameters ($s_1$, $s_2$, $s'_1$, $s'_2$) stored in the buffer store, and comprising reading of the auxiliary result value ($H_1$, $H_2$) which is associated with the values of the calling parameters ($s_1$, $s_2$, $s'_1$, $s'_2$) of the current evaluation from the buffer store (35) if the values of the calling parameters ($s_1$, $s_2$, $s'_1$, $s'_2$) for the current evaluation match the values of the calling parameters ($s_1$, $s_2$, $s'_1$, $s'_2$) which are stored in the buffer store (35), and
c) the Jacobi matrix (J) is determined by means of the auxiliary result values ($H_1$, $H_2$) obtained in step b).

**2.** Method according to Claim 1,
**characterized in that**
a number of values of the calling parameters ($s_1$, $s_2$, $s'_1$, $s'_2$) and the respectively associated auxiliary result value ($H_1$, $H_2$) are stored in the buffer store (35), with this number corresponding to the number of evaluations of the auxiliary function (25) which are carried out on the basis of the dynamic diagram in step a).

**3.** Method according to Claim 2,
**characterized in that** the multiple evaluation of the auxiliary function (25) is carried out in a defined evaluation sequence.

**4.** Method according to Claim 3,
**characterized in that**
the number of values of the calling parameters ($s_1$, $s_2$, $s'_1$, $s'_2$) and the associated auxiliary result value ($H_1$, $H_2$) are stored in the buffer store in a sequence which corresponds to the defined evaluation sequence.

**5.** Method according to Claim 4,
**characterized in that**
in each multiple evaluation of the auxiliary function (25) in step b), the current values of the calling parameters ($s_1$, $s_2$, $s'_1$, $s'_2$) are compared with the corresponding values of the calling parameters ($s_1$, $s_2$, $s'_1$, $s'_2$) stored in the buffer store (35).

**6.** Simulator (60) for simulation of a technical system in a number of simulation steps, with the technical system being described by a state description (30) which comprises state variables ($x_1$, $x_2$, $x_3$) for the technical system, with its Jacobi matrix (J) being used to solve the state description (30), and with the state description (30) having at least one auxiliary function (25) which is evaluated a number of times repeatedly in each simulation step,
**characterized by**
a buffer store (35) in which values of calling parameters and the respectively associated auxiliary result value ($H_1$, $H_2$) of the auxiliary function (25) are stored in a defined evaluation sequence (R) in each case in one subarea (35a, 35b) of the buffer store (35), in which case, on each repetition of the multiple evaluation, the auxiliary result value ($H_1$, $H_2$) which is

stored in a subarea is read by means of a specific read access to this subarea of the buffer store, if the current values of the calling parameters ($s_1$, $s_2$, $s'_1$, $s'_2$) match the stored values of the calling parameters ($s_1$, $s_2$, $s'_1$, $s'_2$).

## Revendications

**1.** Procédé pour la simulation d'un système technique en un certain nombre d'étapes de simulation, le système technique étant décrit par une description d'états (30) qui comprend des grandeurs d'état ($x_1$, $x_2$, $x_3$) du système technique, la matrice de Jacobi (J) de la description d'états (30) étant utilisée pour résoudre celle-ci et la description d'états (30) comprenant au moins une fonction auxiliaire (25) qui est évaluée plusieurs fois de façon répétée dans chaque étape de simulation,
**caractérisé par le fait que** chaque étape de simulation comprend les sous-étapes de simulation suivantes :

a) la fonction auxiliaire (25) est évaluée plusieurs fois en fonction d'un diagramme dynamique (5) représentant le système technique et les valeurs des paramètres d'appel respectifs ($s_1$, $s_2$, $s'_1$, $s'_2$) de la fonction auxiliaire (25) ainsi que la valeur de résultat auxiliaire respectivement associée ($H_1$, $H_2$) de chaque évaluation sont mémorisées dans une mémoire intermédiaire (35),
b) les unes après les autres, la valeur actuelle de chaque grandeur d'état ($x_1$, $x_2$, $x_3$) est modifiée d'une certaine quantité en conservant les valeurs des autres grandeurs d'état et la fonction auxiliaire (25) est à nouveau évaluée plusieurs fois en fonction du diagramme dynamique (5), chaque évaluation consistant en un calcul de la valeur de résultat auxiliaire respective ($H_1$, $H_2$) si les valeurs des paramètres d'appel de l'évaluation actuelle ne coïncident pas avec les valeurs des paramètres d'appel ($s_1$, $s_2$, $s'_1$, $s'_2$) mémorisées dans la mémoire intermédiaire et consistant en une lecture de la valeur de résultat auxiliaire ($H_1$, $H_2$) associée aux valeurs des paramètres d'appel ($s_1$, $s_2$, $s'_1$, $s'_2$) de l'évaluation actuelle dans la mémoire intermédiaire (35) si les valeurs des paramètres d'appel ($s_1$, $s_2$, $s'_1$, $s'_2$) de l'évaluation actuelle coïncident avec les valeurs des paramètres d'appel ($s_1$, $s_2$, $s'_1$, $s'_2$) mémorisées dans la mémoire intermédiaire (35), et
c) la matrice de Jacobi (J) est déterminée au moyen des valeurs de résultat auxiliaire ($H_1$, $H_2$) obtenues à l'étape b).

**2.** Procédé selon la revendication 1,

**caractérisé par le fait qu'**un certain nombre de valeurs de paramètres d'appel ($s_1$, $s_2$, $s'_1$, $s'_2$) et la valeur de résultat auxiliaire respectivement associée ($H_1$, $H_2$) sont mémorisées dans la mémoire intermédiaire (35), ce nombre correspondant au nombre d'évaluations de la fonction auxiliaire (25) qui sont effectuées suivant le diagramme dynamique à l'étape a).

3. Procédé selon la revendication 2, **caractérisé par le fait que** l'évaluation multiple de la fonction auxiliaire (25) s'effectue dans un ordre d'évaluation fixé.

4. Procédé selon la revendication 3, **caractérisé par le fait que** les valeurs des paramètres d'appel ($s_1$, $s_2$, $s'_1$, $s'_2$) et la valeur de résultat auxiliaire respectivement associée ($H_1$, $H_2$) sont mémorisées dans la mémoire intermédiaire dans un ordre qui correspond à l'ordre d'évaluation fixé.

5. Procédé selon la revendication 4, **caractérisé par le fait que**, lors de chaque évaluation multiple de la fonction auxiliaire (25) à l'étape b), les valeurs actuelles des paramètres d'appel ($s_1$, $s_2$, $s'_1$, $s'_2$) sont comparées aux valeurs des paramètres d'appel ($s_1$, $s_2$, $s'_1$, $s'_2$) correspondantes mémorisées dans la mémoire intermédiaire (35).

6. Simulateur (60) pour la simulation d'un système technique en un certain nombre d'étapes de simulation, le système technique étant décrit par une description d'états (30) qui comprend des grandeurs d'état ($x_1$, $x_2$, $x_3$) du système technique, la matrice de Jacobi (J) de la description d'états (30) étant utilisée pour résoudre celle-ci et la description d'états (30) comprenant au moins une fonction auxiliaire (25) qui est évaluée plusieurs fois de façon répétée dans chaque étape de simulation, **caractérisé par** une mémoire intermédiaire (35) dans laquelle sont mémorisées des valeurs de paramètres d'appel et la valeur de résultat auxiliaire respectivement associée ($H_1$, $H_2$) de la fonction auxiliaire (25) dans un ordre d'évaluation fixé (R) à chaque fois dans une zone partielle (35a, 35b) de la mémoire intermédiaire (35), sachant que, à chaque répétition de l'évaluation multiple, au moyen d'un accès en lecture ciblé à une zone partielle de la mémoire intermédiaire, la valeur de résultat auxiliaire ($H_1$, $H_2$) mémorisée dans cette zone partielle est lue si les valeurs actuelles des paramètres d'appel ($s_1$, $s_2$, $s'_1$, $s'_2$) coïncident avec les valeurs mémorisées des paramètres d'appel ($s_1$, $s_2$, $s'_1$, $s'_2$).

$$\underline{J} = \begin{pmatrix} \dfrac{\delta f_1}{\delta x_1} & \dfrac{\delta f_1}{\delta x_2} & \dfrac{\delta f_1}{\delta x_3} \\[2mm] \dfrac{\delta f_2}{\delta x_1} & \dfrac{\delta f_2}{\delta x_2} & \dfrac{\delta f_2}{\delta x_3} \\[2mm] \dfrac{\delta f_3}{\delta x_1} & \dfrac{\delta f_3}{\delta x_2} & \dfrac{\delta f_3}{\delta x_3} \end{pmatrix}^{T}$$

50

$$\frac{d}{dt}\begin{pmatrix} x_1 \\ x_2 \\ x_3 \end{pmatrix} = \begin{pmatrix} b(t)\cdot x_2 + h(x_1, x_2) \\ h(c(t)\cdot x_2, x_3) \\ d(t)\cdot x_3 + h(c(t)\cdot x_2, x_3) \end{pmatrix} = f(x_1, x_2, x_3, t) = \begin{pmatrix} f_1(x_1, x_2, x_3, t) \\ f_2(x_1, x_2, x_3, t) \\ f_3(x_1, x_2, x_3, t) \end{pmatrix}$$

30

FIG 1

FIG 2

EP 1 483 633 B1